# EUROPÄISCHE PATENTSCHRIFT

(11) **EP 0 270 812 B1**
(45) Veröffentlichungstag und Bekanntmachung des Hinweises auf die Patenterteilung: **20.01.1993**
(21) Anmeldenummer: 87115853.1
(22) Anmeldetag: 28.10.1987
(51) Int. Cl.: G06K 19/02, G06K 19/08, B42D 15/02

(54) **Identifikationskarten mit farblich abgedeckter Magnetpiste und Verfahren zu deren Herstellung**
Identification cards with a colour-covered magnetic track, and method of manufacturing them
Cartes d'identification à couche magnétique recouverte d'une couleur et procédé de fabrication

(30) Priorität: 12.11.1986 DE 3638575
(43) Veröffentlichungstag der Anmeldung: 15.06.1988
(73) Patentinhaber: GAO Gesellschaft für Automation und Organisation mbH, 81307 München (DE)
(72) Erfinder: Hoppe, Joachim, D-8000 München 80 (DE)
(74) Vertreter: Klunker . Schmitt-Nilson . Hirsch

(56) Entgegenhaltungen:
- EP-A- 0 071 850
- EP-A- 0 088 941
- FR-A- 2 161 663
- GB-A- 1 590 439
- GB-A- 2 026 946
- US-A- 4 132 350

## Beschreibung

Die Erfindung betrifft ein Verfahren zur Herstellung von Identifikationskarten mit mindestens einer opaken Kartenschicht und mindestens einer auf einer Kartenseite mit einem Trägerband aufgebrachten, mit einer oder mehreren Schichten abgedeckten Magnetpiste und einem auf der Kartenobefläche aufgebrachten Druckbild sowie eine nach oberem Verfahren hergestellte Identifikationskarte.

Identifikationskarten (im folgenden ID-Karten genannt) sind heute als Ausweis-, Scheck- oder Kundenkarten weit verbreitet. Zur maschinellen Bearbeitung werden diese Karten mit Magnetstreifen versehen, auf denen personen-, kartenbezogene und/oder gegebenenfalls weitere Informationen aufgezeichnet sind, welche gegebenenfalls laufend aktualisiert werden. Die Aufbringung der Magnetpisten erfolgt unter anderem in sogenannten Laminier- oder Transferbandtechniken, wobei bei der Laminierbandtechnik die Magnetpiste auf einem Trägerband in Streifenform vorgefertigt und dieses in einem späteren Arbeitsgang zusammen mit der Magnetbeschichtung in die Kartendeckfolie eingebettet wird, wogegen beim Transferverfahren die Materialien und Schichtfolgen so gewählt werden, daß das Trägerband nach der Übertragung der Magnetschicht auf die Kartendeckschicht von der Kartendeckschicht abgezogen werden kann.

Die Magnetpiste selbst hat in der Regel eine braune oder schwarze Eigenfarbe, durch die die Gestaltungsmöglichkeiten des Kartendruckbildes drastisch eingeschränkt werden. Es wurde daher bereits mehrfach versucht, die Magnetpiste durch zusätzliche Maßnahmen besser in das Kartendesign einzufügen.

Zu dieser Aufgabenstellung schlägt die EP-A 0 071 850 vor, eine Magnetpiste durch deren Form in das Kartendesign zu integrieren. Hierzu wird zum Beispiel vorgeschlagen, die Magnetpiste in Form eines "inselförmigen", aber noch länglichen Streifens aufzubringen. Obwohl die Magnetpiste, die vorzugsweise mit einer nichtmagnetischen Metallschicht und/oder einer Farbschicht abgedeckt ist, weiterhin als Magnetpiste zu erkennen ist, teilt dieser "inselförmige" Streifen das Kartendruckbild nicht mehr in derart strenger Form in zwei voneinander vollständig getrennte Zonen. Das Kartendesign umschließt in diesem Fall den Bereich der Magnetpiste, weshalb es durch die Piste weniger gestört wird. Dieser speziell geschnittene Magnetpistenstreifen wird zusammen mit einer oder mehreren Farbschichten mit Hilfe bekannter Transferbandtechniken auf die Karte aufgebracht. In einer Ausführungsform trägt dieser bekannte Transferband-Träger eine Farbschicht und darauf eine Magnetschicht. Um der Magnetpiste die gewünschte äußere Form zu geben, werden die zu übertragenden Schichten bei diesem Verfahren auf dem Trägerband mit entsprechend geformten Werkzeugen gestanzt. Daraufhin wird das den Streifen umrahmende Schichtmaterial entfernt und die ausgeschnittene Schichtenfolge mit Hilfe des Trägerbandes auf die eine transparente Deckfolie der Karte bildende Schicht aufgebracht. Nachdem das Trägerband abgezogen ist, wird die "inselförmige", mit Farbe überdruckte Magnetpiste in die Folie gepreßt. Der so eingebrachte Magnetstreifen ergänzt damit auch farblich ein auf einer tieferliegenden Kartenkernschicht aufgebrachtes Druckbild. Um nun die mit Farbe abgedeckte Magnetpiste optimal an das jeweilig gewünschte Design anzupassen, muß bei jeder Kartenserie sowohl die Form des Magnetstreifens als auch die über der Magnetpiste vorgesehene Farbe entsprechend gewählt werden, so daß für jede Kartenserie ein darauf abgestimmtes Transferband erstellt werden muß.

Des weiteren ist es erforderlich, daß bei einem Wechsel der Kartenserie während der Kartenproduktion jeweils auch das Transferband ausgetauscht sowie der Bogenvorlauf mit den Transportvorrichtungen für die Transferbandzuführung synchronisiert werden muß, damit die bereits auf dem Transferband-Träger gestanzten Schichten wegen ihrer speziellen Gestaltung richtig positioniert, d. h. passergenau, auf die Karten bzw. Bögen aufgebracht werden.

Da bei dem aus der EP-A 0 071 850 bekannten Verfahren für jede Kartenserien eigene Transferbänder erstellt werden müssen, die Justierung der Transferbänder zusätzlich durch die jeweils einzuhaltende Phasenlage des Bandes zur Karte erschwert wird und diese Justierung vor der Produktion jeder Kartenserie erneut durchgeführt werden muß, wird nach dem bekannten Verfahren sowohl die Fertigung von Kleinserien erheblich verteuert als auch die Durchführung von Großserien wegen des relativ großen Aufwandes erschwert.

Ähnliches gilt für das in der US-A 4,132,350 beschriebene Verfahren zur Herstellung einer Magnetkarte, welche im Bereich des Magnetstreifens einen farbigen Aufdruck trägt. In diesem Fall wird in einem ersten Verfahrensschritt ein Trägersubstrat in fester Reihenfolge mit einer transparenten Abdeckschicht, einem Druckbild, einer durchgehenden Farbschicht und einer magnetischen Schicht versehen. In einem zweiten Verfahrensschritt wird dieses Trägerband derart auf die Kartendeckschicht aufgelegt, daß die Magnetschicht innen, in direktem Kontakt zur Kartendeckschicht zu liegen kommt. Nach der anschließenden Laminierung wird das Trägerband abgezogen, während die übrigen Schichten auf der Kartendeckschicht haften.

Bei diesem Verfahren müssen für jede Kartenserie eigene Transferbänder erstellt werden Darüber hinaus erlaubt das bekannte Verfahren kein einheitliches Bedrucken der Kartendeckschicht über den mit magnetischem Material versehenen Bereich hinaus, da Aufdruck und Magnetschicht mit demselben Transferband übertragen werden.

Die Aufgabe der Erfindung besteht daher darin, das Verfahren zur Herstellung von ID-Karten mit farblich bedruckter Magnetpiste zu rationalisieren, so daß, wenn möglich unter Einbeziehung herkömmlicher Fertigungsverfahren, sowohl Klein- als auch Großserien kostengünstig hergestellt werden können.

Diese Aufgabe wird gemäß Anspruch 1 gelöst.

Mit der erfindungsgemäßen Lösung wird nun erreicht, daß auch für die Herstellung von Karten mit farbig gestalteten Magnetpisten die Laminier- oder Transferbandherstellung von der Kartenherstellung entkoppelt wird und zudem durch die Aufbringung der weiß abgedeckten Magnetpiste direkt auf eine weiß gefärbte Kartenschicht oder auf eine mit einer weiß gefärbten Schicht zu unterlegenden transparenten Schicht ein völlig anwenderneutrales Halbzeug erstellt ist. Die vorliegende Erfindung ermöglicht damit die Herstellung weißer ID-Karten, bei denen beide Seiten völlig neutral ausgeführt sind.

Dieses einheitlich gestaltete Halbzeug kann dann frei wählbar ein- oder beidseitig mit dem jeweils gewünschten Druckbild versehen werden, ohne daß bei der Designwahl der Magnetstreifenbereich gesondert berücksichtigt werden muß.

Des weiteren hat die Gestaltung des Halbzeugs in einheitlicher weißer Farbe den Vorteil, daß selbst wenn für das Druckbild dünne Druckschichten oder helle, gegebenenfalls auch lasierende, Farben zur Anwendung kommen, diese durch den neutralen Untergrund im Magnetpistenbereich nicht verfälscht werden. Die Farben für das rückwärtige Druckbild sind demnach problemlos gemäß der gewünschten Farbgebung nach standardmäßigen Farbtabellen auszuwählen. Spezielle farbliche Beschränkungen existieren nicht. Da die Farben des Druckbildes durch die weiße Abdeckschicht und die weiße Kartenschicht in gleicher Weise beeinflußt werden, wird die Karte auch nicht mehr, durch eine von ihrer Umgebung abweichende Farbgebung im Magnetstreifenbereich, in mehrere Zonen geteilt.

Eine weitere besonders vorteilhafte Folge der erfindungsgemäßen Lösung ist, daß für alle Kartenserien der gleiche Laminierband- oder Transferbandtyp verwendbar ist. Damit kann das Band in größeren Mengen und somit kostengünstig erstellt und bezogen werden. Gleichzeitig wird dadurch die Zahl der verfügbar zu haltenden Laminierband- oder Transferbandsorten drastisch reduziert.

Während des Herstellungsprozesses selbst sind somit bei einem Wechsel des Kartendesigns weder ein Austausch der Laminier- oder Transferbänder, noch andere manuelle Eingriffe bezüglich der Bandeinrichtung erforderlich. Der sonst durch den Austausch und der Zwischenjustierung üblicherweise bei jeder Kartenserie anfallende Ausschuß entfällt, wodurch gerade Kleinserien wirtschaftlich günstiger produziert werden können.

Die weiße Abdeckschicht im Magnetpistenbereich kann auch bei der Druckbildgestaltung mitgenutzt werden. In einer vorteilhaften Ausführungsform wird das Druckbild im Negativsiebdruck aufgebracht, wobei die ausgesparten oder freibleibenden Bereiche z. B. Buchstabenform aufweisen und eine beliebige Information darstellen können. Diese Bereiche werden vorzugsweise in Positivdruck mit Klarlack überdeckt, um die vorzugsweise sehr dünn ausgeführte weiße Abdeckschicht gegen Abrieb zu schützen. Der Negativsiebdruck kann wahlweise auch mit mehreren Farben durchgeführt werden, wobei vorzugsweise zumindest im Bereich der Magnetpiste zwischen allen Farbzonen eine geringe unbedruckte Lücke vorzusehen ist. Durch diese Lücken werden durch überlappende Druckschichten entstehende "Stufen" vermieden, die die Magnetaufzeichnung stören können. Zudem gibt der durch diese Lücken entstehende weiße Rand zwischen den Farbzonen weitere Möglichkeiten, das Druckbild gestalterisch zu variieren. Die Schichtdicke dieser Farb- bzw. Klarlackschicht ist im gesamten Magnetstreifenbereich annähernd konstant. Bei der Abtastung der Magnetinformation ist somit der Magnetkopf längs der gesamten Piste immer gleich weit von der Magnetschicht entfernt und liefert entlang der gesamten Piste immer Signale gleicher Qualität.

Weitere Vorteile und vorteilhafte Weiterbildungen sind Gegenstand der Unteransprüche und der Beschreibung anhand der Figuren.

Die Figuren zeigen:
- Fig. 1: ein Laminierband mit farblich abgedeckter Magnetpiste,
- Fig. 2: eine Schnittansicht der Kartendeckschicht mit darin eingelagerter Magnetpiste,
- Fig. 3: diese Kartendeckschicht in der Aufsicht,
- Fig. 4: die Kartendeckschicht nach dem Druckvorgang,
- Fig. 5: eine erfindungsgemäß hergestellte ID-Karte,
- Fig. 6 - 7: mögliche Ausführungsformen von ID-Karten,
- Fig. 8: ein Transferband mit farblich abgedeckter Magnetpiste,
- Fig. 9: eine ID-Karte mit im Transferverfahren aufgebrachter Magnetpiste,
- Fig. 10 - 14: weitere Ausführungsformen erfindungsgemäßer ID-Karten.

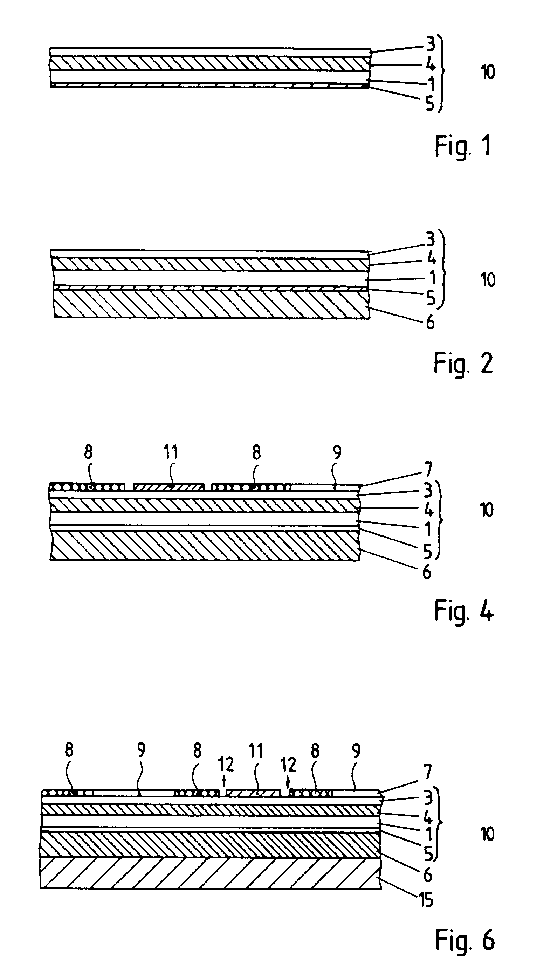

Die Fig. 1 zeigt ein Laminerband zur Übertragung einer Magnetpiste auf die Karte. Die Übertragungstechniken mit Hilfe von Trägerbändern haben sich generell aus verschiedenen Gründen als besonders wirtschaftlich erwiesen, da die Magnetpistenproduktion hier unabhängig von der Kartenproduktion auf eigenen hierfür vorgesehenen und darauf spezialisierten Produktionsanlagen erfolgen kann. Dadurch wird in besonderem Maße eine gleichbleibende Schichtqualität gewährleistet. Insbesondere kann die Beschichtung, wie bei der Herstellung von Magnetbändern der Tonband- und Videotechnik üblich, auf größeren Flächen, z. B. auf einem breiten Trägerband, erfolgen, das anschließend in Bänder beliebiger Breite geschnitten werden kann.

Wie aus Fig. 1 ersichtlich, wird beispielsweise zur Herstellung eines Laminierbandes 10 auf ein Trägerband 1 aus Kunststoff, wie z. B. Polyester, nacheinander und jeweils überlagernd eine Schichtfolge, bestehend aus einer Magnetschicht 4 und einer Abdeckschicht 3 aufgebracht. Die Magnetschicht 4 wird in bekannter Weise auf das Trägerband aufgetragen und auf die getrocknete Magnetschicht wird eine als Abdeckschicht dienende weiße Farbschicht vorzugsweise im Tiefdruckverfahren aufgebracht. Dadurch sind Schichtdicken von unter 10 µm in guter Druckqualität erreichbar. Für diese Abdeckschicht werden weiße Druckfarben gewählt, die auch bei geringer Schichtdicke von einigen µm eine hohe Deckkraft besitzen, so daß die dunkle Farbe der Magnetschicht 4 von der weißen Farbschicht 3 vollständig abgedeckt wird und der Abstand zwischen Magnetkopf und Magnetpiste möglichst gering ist. Damit ist die Magnetpiste auch bei hoher Schreibdichte ausreichend gut beschreib- und auslesbar. Geeignete Farben können, falls sie aufgrund eines hohen Pigmentanteils und einen eventuell dadurch bedingten niedrigen Bindemittelanteil nur geringe Abriebfestigkeit aufweisen, durch die während der Kartenproduktion erfolgende Bedruckung der Abdeckschicht mit Farbe oder Klarlack vor Abrieb geschützt werden.

Das Laminierband 10 wird dann bei der ID-Kartenproduktion auf die Kartendeckschicht 6 heiß aufgewalzt (Fig. 2), wobei das Trägerband 1 mit der Kartendeckschicht verbunden wird. Das Trägerband verbleibt damit unter der für den Betrachter weiß abgedeckten Magnetpiste auf der Kartendeckschicht 6. Um eine gute Haftwirkung zwischen Trägerband 1 und Kartendeckschicht 6 zu erreichen, kann das Trägerband mit einer zusätzlichen Klebeschicht 5 (Schmelzkleber) versehen werden. Die Kartendeckschicht 6 kann selbst weiß gefärbt oder auch transparent ausgeführt sein, wobei im letzten Fall die transparente Schicht zu einem späteren Zeitpunkt auf eine weiß gefärbte und gegebenenfalls vorab mit einem Druckbild versehene weitere Kartenschicht aufgebracht wird. Die Kartendeckschicht 6 besteht z. B. aus einer thermoplastischen Kunststoffschicht aus PVC, in die die weiß abgedeckte Magnetschicht unter Wärme- und Druckeinwirkung derart eingelagert werden kann, daß die weiße Abdeckschicht und die Kartendeckschicht 6 eine glatte Oberfläche bilden.

Die Kartenherstellung erfolgt üblicherweise im Bogen mit mehreren Einzelnutzen, wobei diese Kartendeckschicht 6 entweder als Bogen oder als Endlosrolle vorliegt, aus der anschließend die Mehrnutzenbögen ausgeschnitten werden.

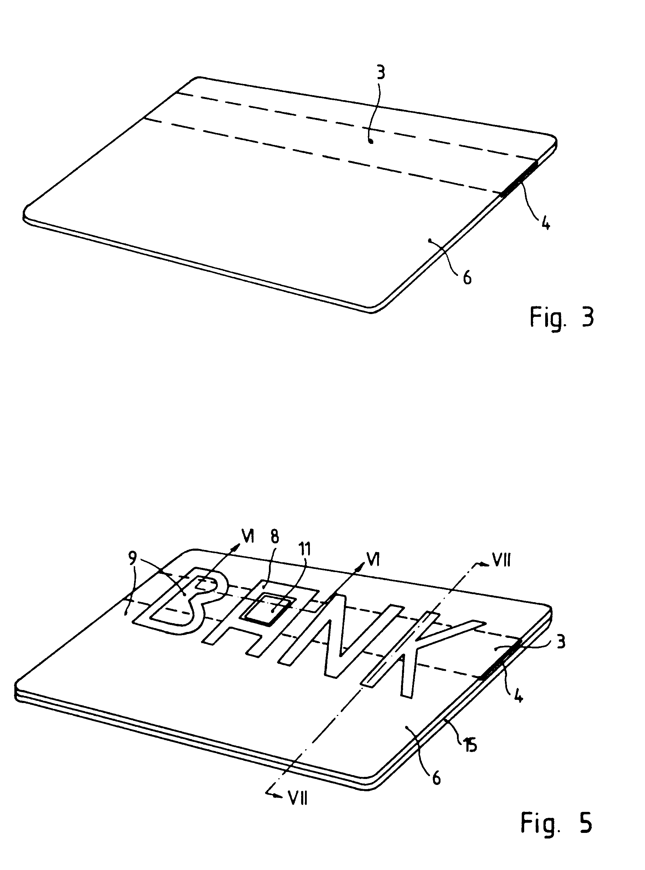

Fig. 3 zeigt das nach dem erfindungsgemäßen Verfahren hergestellte Halbzeug, bestehend aus der unbedruckten Kartendeckschicht 6 (zur Verdeutlichung bereits in Form der späteren ID-Karte) mit der weiß abgedeckten Magnetpiste 3. Die Lage der Abdeckschicht 4 ist durch die beiden gestrichelten Linien angedeutet.

Sowohl das mit der weißen Abdeckschicht 3 versehene Laminierband als auch die mit Magnetstreifen versehenen Bögen 6 sind völlig neutral, so daß das in Fig. 2 bzw. 3 gezeigte Halbzeug für die verschiedensten ID-Karten und für die verschiedensten Anwender einsetzbar ist.

Ein Vorteil der Erfindung liegt damit gerade darin, daß beim Transfervorgang für viele verschiedene ID-Kartenserien ein und dasselbe Transferband und ein und dasselbe Bogenmaterial benutzt werden kann. Da bei einem Wechsel des Kartendesigns keine Neueinstellung bezüglich der Transferbandzuführung erforderlich ist, entfällt nun der üblicherweise dabei entfallende Ausschuß.

Dieses anwenderneutrale Halbzeug kann dann im nächsten Schritt mit der Druckschicht 7 versehen werden (Fig. 4 und 5). Dies erfolgt vorzugsweise genau wie das übertragen der Magnetpiste auf Endlosbogen oder auf Einzelbögen. Wegen des neutralen Untergrundes kann sich die Druckschicht 7 unabhängig von der Magnetpiste über die gesamte Kartenfläche erstrecken.

Die Fig. 4 und 5 zeigen mögliche Ausführungsformen für das Druckbild mit den Farbbereichen 8 und 11 und der Klarlackabdeckung 9. Da die weiße Abdeckschicht 4 erst nach dem Aufbringen auf die Kartendeckschicht 6 zusammen mit dieser bedruckt wird, kann man das Druckbild, ohne die letztendlich vorliegende exakte Lage des Magnetbandes zu berücksichtigen, aufbringen. Etwaige Positionierungsfehler beim Aufbringen des Laminierbandes führen dann nicht zu störenden Versetzungen im Druckbild. Das Druckbild ist also immer präzise ausgeführt.

Nach dem Druckvorgang wird der Bogen 6 gegebenenfalls mit den übrigen, die weiteren Kartenschichten bildenden, Bögen kaschiert und daraus die Karten ausgestanzt.

Fig. 5 zeigt die fertige Karte, bestehend aus der bedruckten Kartendeckschicht 6 und einer weiteren Kartenschicht 15. Das Druckbild kann sich auf den gesamten Kartenbereich erstrecken und ist nicht auf den Bereich der Magnetpiste oder die restlichen Kartenbereichen beschränkt. Das Druckbild kann in verschiedenen Drucktechniken, z. B. im Siebdruckverfahren, aufgebracht werden. Es weist zumindest im Bereich der Magnetpiste auf den von den Farbbereichen 8 und 11 nicht überdeckten Flächen eine Klarlackabdeckung 9 auf.

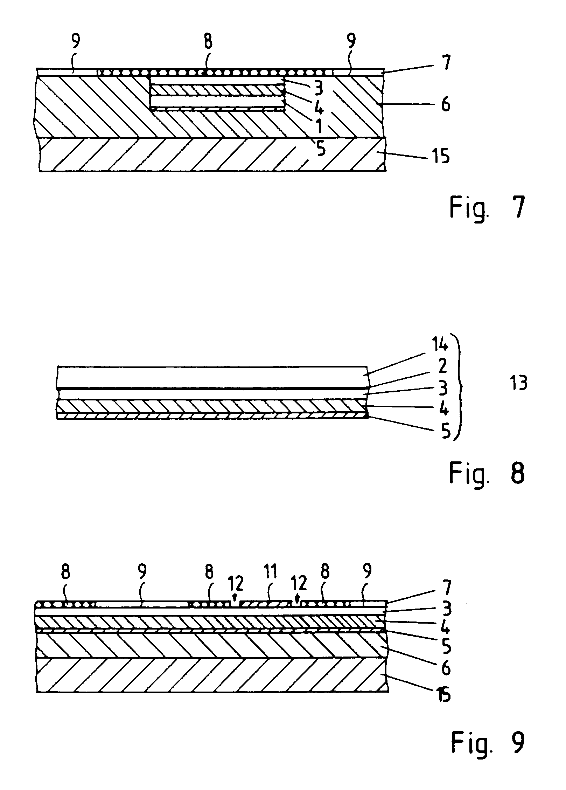

Fig. 6 zeigt den Schnitt VI-VI der in Fig. 5 gezeigten Karte mit den Kartenschichten 6 und 15. Auf der Kartendeckschicht 6 befindet sich die mittels dem Laminierband aus Fig. 1 aufgebrachte Schichtfolge, bestehend aus Klebeschicht 5, Trägerband 1, Magnetschicht 4 und Abdeckschicht 3 sowie der Druckschicht 7.

Die Druckschicht 7 besteht aus dem Farbbereich 8, der Klarlackabdeckung 9 und dem Farbbereich 11. Für die Qualität der magnetischen Signalabtastung ist es günstig, daß im Bereich der Magnetschicht der Klarlack und die Druckfarbe bzw. die verschiedenen Druckfarben in gleicher Dicke und nicht übereinander gedruckt werden. Dadurch wird erreicht, daß der Abtastkopf beim Lesen und Beschreiben der Magnetpiste von dieser immer gleich weit entfernt bleibt und die magnetischen Signale entlang der gesamten Magnetpiste um einen konstanten Faktor gedämpft werden. Wie in Fig. 6 gezeigt, können die verschiedenen Farbbereiche 8, 11 so gestaltet sein, daß zwischen diesen eine kleine Lücke 12 verbleibt. Diese Lücken sind so schmal ausgeführt, daß bei der Abtastung der Lauf des Magnetkopfes nicht beeinträchtigt wird und die weiße Abdeckschicht hier auch nicht durch eine Klarlackabdeckung geschützt werden muß. Außerdem ist aufgrund dieser Lücke 12 der Farbbereich 11 mit einem feinen weißen Rand umgeben, wodurch sich weitere gestalterische Effekte ergeben.

Fig. 7 zeigt die Schnittansicht VII-VII der in Fig. 5 gezeigten Karte. Vor dem Druckvorgang wurden die hier mit einem Laminierband aufgebrachten Schichten (Klebeschicht 5, Trägerschicht 1, Magnetschicht 4 und Abdeckschicht 3) in die Kartendeckschicht eingepreßt, so daß für den Druckvorgang eine ebene Fläche vorliegt. Die Druckschicht 7 kann dann problemlos sowohl auf die weiße Abdeckschicht als auch auf Teile der übrigen Oberfläche der Kartendeckschicht aufgebracht werden.

Die Kartenschicht 6 kann z. B. direkt die weiß gefärbte Kartenschicht sein oder auch eine transparente Deckschicht, die durch eine weiße Kunststoffschicht unterlagert ist.

Wird die Magnetpiste zunächst auf eine transparente Kunststoffolie aufgebracht, die dann auf eine weiße Untergrundfläche übertragen wird, kann diese weiße Untergrundfläche vorab mit einem zusätzlichen Druckbild versehen werden.

Eine andere bevorzugte Übertragungstechnik für eine Magnetpiste ist das sogenannte Transferverfahren. Hierbei werden mit einer Magnetschicht versehene Transferbänder verwendet, die einen Zwischenträger für die Magnetpiste bilden. Die Fig. 8 zeigt ein derartiges erfindungsgemäß verwendetes Transferband.

Im Gegensatz zum Laminierband trägt das Transferband die aufzubringenden Schichten auf dem Trägerband in umgekehrter Reihenfolge. Auf das Trägerband 14 (z. B. aus Polyester) werden nacheinander eine Trennschicht 2, die weiße Abdeckschicht 3, die Magnetschicht 4 und eine Klebeschicht 5 in genannter Reihenfolge übereinander aufgebracht. Da die Magnetschicht in flüssiger Form auf die Abdeckschicht aufgebracht wird, ist bei der Wahl der Magnetfarbe und der Abdeckschicht bzw. der Dicke darauf zu achten, daß die dunkle Magnetfarbe nicht in die Poren der Abdeckschicht eindringt und damit die Abdeckwirkung beeinträchtigt. Dieses Transferband wird auf die Kartendeckschicht heiß aufgewalzt und das Trägerband abgezogen, so daß nur die weiße Abdeckschicht und die Magnetschicht mit der Klebeschicht auf der Kartenschicht verbleiben. Da der Transferbandträger wieder abgezogen wird, empfiehlt sich eine dünne Trennschicht (z. B. aus Paraffenwachs) zwischen Transferbandträger und weißer Abdeckschicht.

Auf die Klebeschicht 5 kann gegebenenfalls verzichtet werden, wenn für die Kartendeckschicht und für das Basismaterial der Magnetschicht Kunststoffe hoher Affinität verwendet werden, die sich alleine durch Wärme- und Druckeinwirkung ausreichend gut miteinander verbinden lassen.

Auch nach diesem Verfahren wird ein anwenderneutrales Halbzeug geschaffen, das erst bei der letztendlichen Karenfertigung mit dem anwenderbezogenen Druckbild versehen wird.

Die Fig. 9 zeigt eine nach diesem Verfahren hergestellte ID-Karte. Das Druckbild 7 kann wie in den vorgenannten Beispielen unterschiedliche, eventuell durch schmale Lücken 12 getrennte Farbbereiche 8 und 11 aufweisen. Größere Folienflächen im Magnetpistenbereich werden auch hier vorzugsweise mit einer Klarlackschicht 9 abgedeckt.

Wie bereits eingangs ausgeführt, ist darauf zu achten, daß der Abstand zwischen Magnetkopf und Magnetpiste möglichst gering ist, d. h. daß die Anzahl bzw. die Dicke der Abdeckschichten für die Magnetpiste auf ein Minimum zu beschränken ist. Bei den vorgenannten Beispielen ist bei einer Schreibdichte von 75 bpi - diese Schreibdichte entspricht gemäß der ISO-Norm 7811/2 der Schreibdichte für die Spur 2 - eine exzellente Schreib- und Lesesicherheit gegeben, und selbst bei einer extrem hohen Schreibdichte von 210 bpi - ISO-Norm 7811/2 für die Spuren 1 und 3 - ist die Schreib- und Lesbarkeit ausreichend.

Die Schreib- und Lesesicherheit für die Teilbereiche der Magnetpiste, die gemäß der Norm mit derart hohen Bitdichten zu beschriften sind, kann aber durch einfache, im folgenden noch zu erläuternde Maßnahmen erheblich verbessert werden.

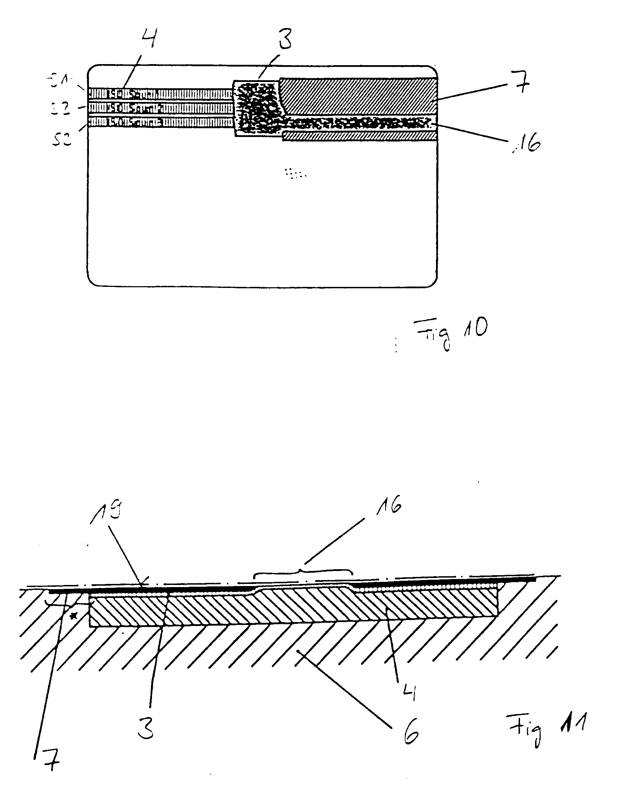

So kann z. B. der Designaufdruck, also die über der Abdeckschicht liegende Druckschicht, in den betreffenden Teilbereichen unterbrochen werden. Die Fig. 10 zeigt eine derartige Ausführungsform. Zur Verdeutlichung sind die Lese- und Schreibspuren in der Magnetschicht 4 (gemäß der ISO-Norm 7811/2 sind es drei Spuren, Seite 1, Seite 2, Seite 3) optisch voneinander getrennt dargestellt. Die Magnetschicht 4 wird von der Abdeckschicht 3 abgedeckt, auf die dann die dem Kartendesign entsprechende farbige Druckschicht 7 aufgebracht wird. Im Teilbereich 16, der hier der ISO-Spur 3 entspricht, ist dieser Designdruck unterbrochen. Diese visuell sichtbare Unterbrechung ist natürlich bei der Entwicklung des Kartendesigns zu berücksichtigen, wirkt sich aber wegen der kleineren Fläche wesentlich weniger störend aus, als eine sich über den gesamten Magnetpistenbereich erstreckende Unterbrechung des Designaufdrucks.

Die Fig. 11 zeigt die Schnittansicht einer derartigen Karte nach deren Kaschierung, bei der die Karte ihre glatte Oberfläche erhält und die Druckschichten, Magnetschichten etc. in die anliegenden Kartenschichten eingepreßt werden. In dem vom Designdruck ausgesparten Bereich 16 ist die Magnetschicht 4 nur durch die Abdeckschicht 3 und gegebenenfalls noch von einer dünnen Karlackschicht 19 von der Kartenoberfläche getrennt, so daß bei der Magnetaufzeichnung/-abtastung der Abstand zwischen Magnetkopf und Magnetschicht entsprechend verringert ist. Bereits geringe Abstandsreduzierungen können aufgrund des spezifischen magnetischen Feldverlaufs bei den bekannten Magnetköpfen schon wesentlich zur weiteren Verbesserung der Schreibund Lesesicherheit beitragen.

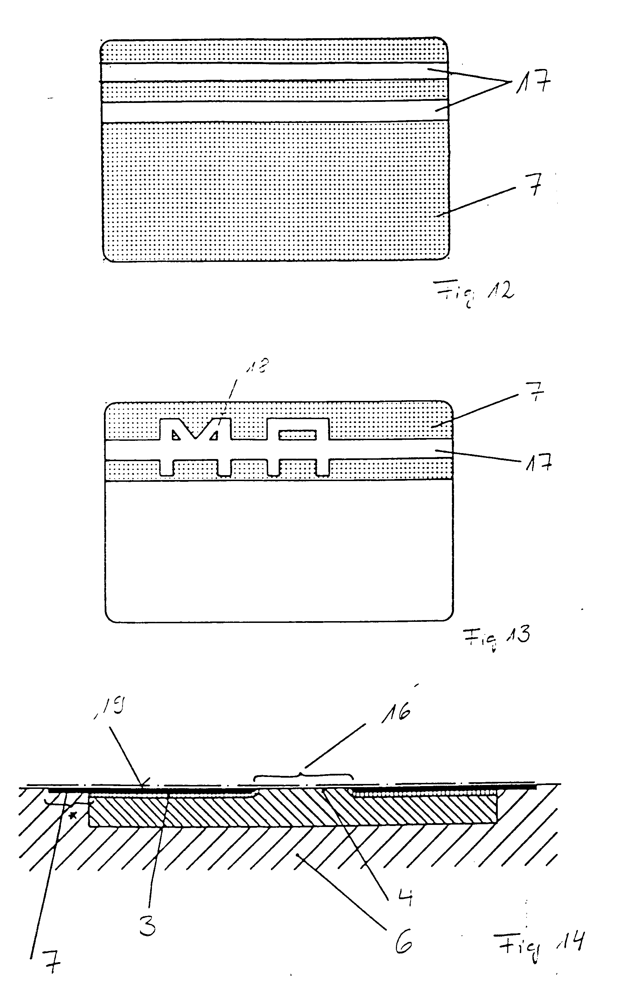

Die Druckschicht 7 des Designaufdrucks kann, wie in Fig. 12 gezeigt, die ganze Kartenoberfläche erfassen und nur die entsprechenden Schreib- und Lesespuren 17 freilassen, die bei der späteren Kartenanwendung auch tatsächlich benutzt werden. In dem hier gezeigten Beispiel sind es zwei über die gesamte Kartenlänge gehende Spuren. Der Aufdruck kann aber auch nur einen Teil der Kartenoberfläche erfassen und/oder durch entsprechende weitere Aussparungen 18 einen Schriftzug, ein Muster oder ähnliches darstellen (Fig. 13).

In Extremfällen kann in den Magnetschichtbereichen 16 hoher Schreibdichte auch auf die Abdeckschicht 3 verzichtet werden (siehe Fig. 14). Allerdings tritt hier dann die Magnetschicht in ihrer schwarzen oder braunen Eigenfarbe zum Vorschein, wodurch die Gestaltungsmöglichkeiten für das Kartenbild eingeschränkt werden.

Durch die vom Designdruck befreiten Zonen ist in jedem Fall gewährleistet, daß auf den Kodierspuren mit hoher Schreibdichte keine oder keine übermäßigen Lackschichtdicken aufgebracht sind, die zu unzulässigen Signaldämpfungen führen könnten. Weiterhin sind keine Dickensprünge durch Passerungenaugigkeiten sowie Lackschichtunterbrechungen durch Designkonturen vorhanden, die Signalverzerrungen hervorrufen könnten. Ein weiterer Vorteil ergibt sich aus der Möglichkeit, über die gesamte Magnetspurbreite eine sehr dünne Klarlackschutzschicht zu legen. Der Klarlack kann gegenüber einem Farblack erheblich dünner aufgetragen werden. Durch Feststoffreduzierung im Klarlack erhält man eine Reduzierung der Naßauftragsstärke und verbesserte Wegschlageigenschaften.

## Patentansprüche

1. Verfahren zur Herstellung von Identifikationskarten mit mindestens einer opaken Kartenschicht (6,15) und mindestens einer, auf einer Kartenseite mit einem Trägerband (1) aufgebrachten, mit einer oder mehreren Schichten abgedeckten Magnetpiste (4) und einem auf der Kartenoberfläche aufgebrachten Druckbild, mit folgenden Verfahrensschritten:
- Aufbringen einer weißen Abdeckschicht (3) hoher Deckkraft und einer Magnetschicht (4) auf das Trägerband (1),
- Übertragung der Magnetschicht (4) und der Abdeckschicht (3) mit Hilfe dieses Trägerbandes (1) auf eine weiß gefärbte oder transparente Kartendeckschicht (6) derart, daß die Magnetschicht (4) zwischen Abdeckschicht (3) und Kartendeckschicht (6) zu liegen kommt,
- Bedrucken der Kartendeckschicht (6) auf der mit der Magnetschicht versehenen ersten Seite im Bereich der weiß abgedeckten Magnetschicht (4) und gegebenenfalls auch in den restlichen Bereichen,
- Zusammenfügen der bedruckten Kartendeckschicht (6) auf ihrer zweiten Seite, mit mindestens einer weiteren Kartendeckschicht (15) in Bogenform, wobei diese weitere Kartenschicht (15) transparent ist, falls die Kartendeckschicht (6) weiß gefärbt ist bzw. weiß gefärbt ist, falls die Kartendeckschicht (6) transparent ausgeführt ist,
- Laminieren der zusammengefügten Schichten mit der/den übrigen Schicht(en),
- Ausstanzen der einzelnen Karten aus dem Schichtenverband.

2. Verfahren nach Anspruch 1, dadurch **gekennzeichnet**, daß auf das Trägerband (1) die Magnetschicht (4) und auf die Magnetschicht (4) die weiße Abdeckschicht (3) aufgebracht wird, daß das Trägerband dann derart auf die Kartendeckschicht (6) aufgebracht wird, daß es zwischen Magnet- (4) und Kartendeckschicht (6) zu liegen kommt und das Tragerband (1) mit der Kartendeckschicht (6) fest verbunden wird.

3. Verfahren nach Anspruch 2, dadurch **gekennzeichnet,** daß das Trägerband zusätzlich eine Klebeschicht (5) erhalt, so daß eine ausreichende Haftwirkung zwischen Trägerband (1) und Kartendeckschicht (6) erreicht wird.

4. Verfahren nach Anspruch 1, dadurch **gekennzeichnet,** daß auf das Trägerband (1) die weiße Andeckschicht (3) und auf die weiße Abdeckschicht (3) Magnetschicht (4) aufgebracht wird, daß das Trägerband (1) auf die Kartendeckschicht (6) aufgebracht wird, wobei die Magnetschicht (4) der Kartendeckschicht (6) zugekehrt ist und die Magnetschicht (4) und die weiße Abdeckschicht (3) auf der Kartendeckschicht (6) fixiert werden und das Trägerband (1) von der weißen Abdeckschicht (3) abgezogen wird.

5. Verfahren nach Anspruch 4, dadurch **gekennzeichnet,** daß vor dem Aufbringen der weißen Abdeckschicht (3) eine Trennschicht (2) auf das Trägerband (1) aufgebracht wird, um das spätere Loslösen des Trägerbandes (1) von der weißen Abdeckschicht (3) sicherzustellen.

6. Verfahren nach einem der Ansprüche 1 - 5, dadurch **gekennzeichnet,** daß beim Bedrucken der mit Magnet-(4) und Abdeckschicht (3) versehenen Kartendeckschicht (6) das Druckbild (7) den Übergangsbereich zwischen Magnetpiste (4) und ihrer Umgebung (6) stufenlos und kontinuierlich überbrückt.

7. Verfahren nach einem der Ansprüche 1 - 6, dadurch **gekennzeichnet,** daß die weiße Abdeckschicht (3) im Magnetpistenbereich (4) weitgehend vollflächig mit Druckfarbe und/oder Klarlack bedruckt wird.

8. Verfahren nach Anspruch 7, dadurch **gekennzeichnet,** daß die Druckfarben und/oder der Klarlack zumindest im Magnetpistenbereich (4) in konstanter Dicke und nicht überlappend aufgedruckt werden.

9. Verfahren nach Anspruch 8, dadurch **gekennzeichnet,** daß die Druckfarben derart aufgebracht werden, daß zwischen verschiedenen Farbbereichen eine schmale unbedruckte Lücke verbleibt.

10. Verfahren nach wenigstens einem der Ansprüche 1 - 9, dadurch **gekennzeichnet,** daß Teilbereiche der Magnetschicht vom Druck ausgespart bleiben.

11. Identifikationskarte, hergestellt nach dem Verfahren gemäß Anspruch 10, dadurch **gekennzeichnet,** daß
- diese ausgesparten Teilbereiche in der Druckschicht (7) der bzw. den Spuren der Magnetpiste (4) entsprechen, in der bzw. denen eine Datenaufzeichnung mit einer gegenüber den Restbereichen höheren Bit-Dichte erfolgen soll.

## Claims

1. A method for producing an identity card having at least one opaque card layer (6, 15) and at least one magnetic track (4) applied to one side of the card with a carrier band (1) and covered by one or more layers, and a printed pattern applied to the card surface, comprising the steps of:
applying to the carrier band (1) a white masking layer (3) with high covering power and a magnetic layer (4);
transferring the magnetic layer (4) and the masking layer (3) with the aid of said carrier band (1) to a white colored or transparent card cover layer (6) in such a way that the magnetic layer (4) comes to lie between the masking layer (3) and the card cover layer (6);
printing the card cover layer (6) on the first side provided with the magnetic layer in the area of the white masked magnetic layer (4) and optionally also in the other areas;
joining the printed card cover layer (6) on its second side with at least one further card layer (15) in sheet form, this further card layer (15) being transparent if the card cover layer (6) is colored white, or colored white if the card cover layer (6) is transparent;
laminating the joined layers with the other layer or layers;
punching the individual cards out of the layer structure.

2. The method of claim 1, characterized in that the magnetic layer (4) is applied to the carrier band (1) and the white masking layer (3) to the magnetic layer (4), the carrier band is then applied to the card cover layer (6) so as to come to lie between the magnetic layer (4) and the card cover layer (6), and the carrier band (1) is firmly connected to the card cover layer (6).

3. The method of claim 2, characterized in that the carrier band is additionally given an adhesive layer (5) so that a sufficient adhesive effect is obtained between the carrier band (1) and the card cover layer (6).

4. The method of claim 1, characterized in that the white masking layer (3) is applied to the carrier band (1) and the magnetic layer (4) to the white masking layer (3), the carrier band (1) is applied to the card cover layer (6), the magnetic layer (4) facing the card cover layer (6) and the magnetic layer (4) and the white masking layer (3) being fixed to the card cover layer (6) and the carrier band (1) removed from the white masking layer (3).

5. The method of claim 4, characterized in that before the white masking layer (3) is applied a separation layer (2) is applied to the carrier band (1) in order to ensure subsequent detachment of the carrier band (1) from the white masking layer (3).

6. The method of any of claims 1 to 5. characterized in that during printing of the card cover layer (6) provided with the magnetic layer (4) and masking layer (3) the printed pattern (7) bridges the transitional area between the magnetic track (4) and its surroundings (6) ridgelessly and continuously.

7. The method of any of claims 1 to 6, characterized in that the white masking layer (3) is printed with ink and/or transparent lacquer largely all over the surface of the magnetic track area (4).

8. The method of claim 7, characterized in that the inks and/or transparent lacquer are printed in a constant thickness and without overlap at least in the magnetic track area (4).

9. The method of claim 8, characterized in that the inks are applied in such a way as to leave a narrow unprinted gap between various areas of color.

10. The method of at least one of claims 1 to 9, characterized in that some areas of the magnetic layer are left free from print.

11. An identity card produced by the method of claim 10, characterized in that these areas left free from the printed pattern (7) correspond to the track or tracks of the magnetic layer (4) in which data recording is to be performed with a bit density higher than in the other areas.

## Revendications

1. Procédé de fabrication de carte d'identification présentant au moins une couche de carte (6, 15) opaque et au moins une piste magnétique (4) recouverte d'une ou de plusieurs couches et appliquée sur l'une des faces de la carte par une bande de support (1), et une image imprimée appliquée à la surface de la carte, ce procédé comportant les étapes consistant à:
- introduire une couche de couverture (3) blanche à puissance élevée de couverture, et une couche magnétique (4) sur la bande de support (1),
- transférer la couche magnétique (4) et la couche de couverture (3) au moyen de cette bande de support (1) sur une couche de recouvrement de carte (6), de couleur blanche ou transparente, de telle manière que la couche magnétique (4) vienne se placer entre la couche de couverture (3) et la couche de recouvrement de carte (6),
- imprimer la couche de recouvrement de carte (6) sur sa première face munie de la couche magnétique dans la zone de la couche magnétique (4) à couverture blanche et, le cas échéant, également dans les autres zones ,
- assembler la couche imprimée de recouvrement de carte (6) par sa deuxième face à au moins une couche supplémentaire de carte (15) en cintre continue, cette couche supplémentaire de carte (15) étant transparente si la couche de recouvrement de carte (6) est de couleur blanche, ou étant de couleur blanche si la couche de recouvrement de carte (6) est transparente,
- stratifier les couches assemblées avec la ou les autre(s) couche(s),
- découper la (ou les) carte(s) individuelle(s) à partir de la bande multi-couche.

2. Procédé selon la revendication 1, caractérisé en ce que la couche magnétique (4) est appliquée sur la bande de support (1) et la couche blanche de couverture (3) est appliquée sur la couche magnétique (4), en ce que la bande de support est ensuite appliquée sur la couche de recouvrement de carte (6) de telle manière qu'elle vienne se placer entre la couche magnétique (4) et la couche de recouvrement de carte (6) et que la bande de support (1) soit relié rigidement à la couche de recouvrement de carte (6).

3. Procédé selon la revendication 2, caractérisé en ce que la bande de support comporte en outre une couche d'adhésif (5) de manière à obtenir une adhésion suffisante entre la bande de support (1) et la couche de recouvrement de carte (6).

4. Procédé selon la revendication 1, caractérisé en ce que l'on applique la couche blanche de couverture (3) sur la bande de support (1) et la couche magnétique (4) sur la couche de couverture blanche (3), en ce que l'on applique la bande de support (1) sur la couche de recouvrement de carte (6), la couche magnétique (4) étant à l'opposé de la couche de recouvrement de carte (6) et la couche magnétique (4) et la couche de couverture blanche (3) étant fixées sur la couche de recouvrement de carte (6) et la bande de support (1) étant enlevée de la couche de couverture blanche (3).

5. Procédé selon la revendication 4, caractérisé en qu'avant l'application de la couche blanche de couverture (3), on applique une couche de séparation (2) sur la bande de support (1) afin d'assurer la séparation ultérieure de la bande de support (1) de la couche blanche de couverture (3).

6. Procédé selon l'une des revendications 1 à 5, caractérisé en ce que, lors de l'impression de la couche de recouvrement de carte (6) munie de la couche magnétique (4) et de la couche de couverture (3), l'image imprimée (7) constitue un pont continu et sans gradins entre la piste magnétique (4) et son environnement (6).

7. Procédé selon l'une des revendications 1 à 6, caractérisé en ce que la couche blanche de couverture (3), dans la zone de la couche magnétique (4), est imprimée sensiblement sur toute sa surface avec de l'encre d'imprimerie et/ou de la laque transparente.

8. Procédé selon la revendication 7, caractérisé en ce que les encres d'imprimerie et/ou la laque transparente sont appliquées, au moins dans la zone de la piste magnétique (4), sous une épaisseur constante et sans recouvrement.

9. Procédé selon la revendication 8, caractérisé en ce que les encres d'imprimerie sont appliquées de telle manière qu'il subsiste un mince intervalle non imprimé entre les différentes zones colorées.

10. Procédé selon au moins une des revendications 1 à 9, caractérisé en ce que des zones partielles de la couche magnétique restent exemptes d'impression.

11. Carte d'identification fabriquée par le procédé selon la revendication 10, caractérisée en ce que ces zones partielles exemptes d'impression (7) correspondent, sur la couche imprimée, à la piste ou aux pistes de la piste magnétique (4), dans laquelle ou lesquelles doit être réalisé un enregistrement de données à densité binaire supérieure à celle des autres zones.
